# EUROPÄISCHE PATENTSCHRIFT

(11) **EP 2 280 220 B1**
(45) Veröffentlichungstag und Bekanntmachung des Hinweises auf die Patenterteilung: **13.07.2016**
(21) Anmeldenummer: 10004955.0
(22) Anmeldetag: 11.05.2010
(51) Int. Cl.: F21S 8/10

(54) **Lichtmodul für einen Kraftfahrzeugscheinwerfer**
Light module for a motor vehicle headlamp
Module de lumière pour un phare de véhicule automobile

(30) Priorität: 01.08.2009 DE 102009035743
(43) Veröffentlichungstag der Anmeldung: 02.02.2011
(73) Patentinhaber: Automotive Lighting Reutlingen GmbH, 72762 Reutlingen (DE)
(72) Erfinder: Buchberger, Christian, 72770 Reutlingen (DE); Rosenhahn, Ernst-Olaf, 72411 Bodelshausen (DE); Stauß, Benjamin, 22559 Hamburg (DE)
(74) Vertreter: DREISS Patentanwälte PartG mbB

(56) Entgegenhaltungen:
- EP-A1- 1 806 531
- EP-A2- 1 201 989
- WO-A1-2009/039882
- WO-A1-2011/003500
- WO-A2-2008/037388
- DE-A1- 4 315 401
- DE-A1- 10 248 445
- DE-A1- 10 340 961
- DE-A1- 19 756 437
- US-A1- 2003 021 119
- US-A1- 2006 164 852

## Beschreibung

Die vorliegende Erfindung betrifft ein Lichtmodul für einen Kraftfahrzeugscheinwerfer zur Erzeugung einer adaptiven Lichtverteilung, wie aus dem gattungsgemäßen Dokument WO 2009/039882 bekannt.

Die Erfindung betrifft außerdem einen Kraftfahrzeugscheinwerfer mit einem Lichtmodul der genannten Art.

Schließlich betrifft die vorliegende Erfindung auch ein Scheinwerfersystem für ein Kraftfahrzeug zur Ausleuchtung einer Fahrbahn vor dem Kraftfahrzeug mit einer adaptiven Lichtverteilung. Das Scheinwerfersystem umfasst am Bug des Fahrzeugs jeweils mindestens einen Kraftfahrzeugscheinwerfer auf der eigenen Verkehrsseite und auf der Gegenverkehrsseite, Mittel zum Erfassen eines Abbilds eines Bereichs vor dem Fahrzeug und Mittel zum Auswerten des erfassten Abbilds zur Detektion von Objekten vor dem Fahrzeug. Zumindest einer der Scheinwerfer weist mindestens ein Lichtmodul zur Erzeugung einer adaptiven Lichtverteilung der eingangs genannten Art auf.

Ein Lichtmodul der eingangs genannten Art ist beispielsweise aus der DE 10 2007 050 348 A1 bekannt. Dabei kommt eine Blendenanordnung zum Einsatz, die mehrere im Wesentlichen quer zur optischen Achse des Lichtmoduls verlaufende und um eine parallel zur optischen Achse angeordnete horizontale Drehachse relativ zueinander bewegbare Blendenelemente aufweist. Die Blendenelemente weisen Oberkanten mit unterschiedlichen Konturen auf. Eine im Strahlengang angeordnete wirksame Oberkante der Blendenanordnung wird durch eine der Oberkanten oder durch Überlagern mehrerer Oberkanten erzielt. Durch Bewegen der Blendenelemente relativ zueinander kann der Verlauf der wirksamen Oberkante der Blendenanordnung variiert werden. Die wirksame Oberkante der Blendenanordnung kann zur Erzeugung einer abgeblendeten Lichtverteilung mit einer im Wesentlichen horizontal verlaufenden Hell-Dunkel-Grenze in den Strahlengang des von der Lichtquelle ausgesandten und/oder von der Primäroptik gebündelten Lichts eingebracht werden. Auf diese Weise können unterschiedliche, den verschiedenen Verkehrs- und Umweltbedingungen angepasste Lichtverteilungen erzielt werden. Verkehrsbedingungen sind bspw. vorausfahrende oder entgegenkommende Verkehrsteilnehmer, detektierte Objekte (Personen oder Gegenstände) auf der Fahrbahn oder am Fahrbahnrand, die Verkehrsdichte, den Fahrbahnzustand etc. Umweltbedingungen umfassen insbesondere das Wetter (z.B. Nebel, Regen, Schnee, Eis) oder die Tageszeit bzw. die aktuellen Lichtverhältnisse (z.B. Sonne, Wolken, Dämmerung, Dunkelheit). Insbesondere kann auf diese Weise ein Schlechtwetterlicht (eine Weiterentwicklung des Nebellichts), eine herkömmliche Abblendlichtverteilung mit symmetrischer oder asymmetrischer Hell-Dunkel-Grenze, ein Landstraßenlicht, ein Autobahnlicht, ein Stadtlicht, ein Teilfernlicht oder ein herkömmliches Fernlicht erzeugt werden, wobei für das Fernlicht die wirksame Oberkante der Blendenanordnung praktisch vollständig außerhalb des Strahlengangs angeordnet ist.

Die Verkehrssituation und die Umweltbedingungen in der Umgebung des Fahrzeugs können mittels geeigneter Sensoren erfasst werden. Zum Erfassen der Verkehrsbedingungen, insbesondere des vor dem Fahrzeug befindlichen Verkehrsaufkommens, können Kameras (für sichtbares Licht, IR- oder UV-Strahlung), Radarsensoren, Ultraschallsensoren oder andere geeignete Sensoren eingesetzt werden. Die von diesen Sensoren erfassten Abbilder des Bereichs vor dem Fahrzeug werden durch eine Rechnereinheit anhand geeigneter Algorithmen ausgewertet und zur Steuerung der Blendenanordnung und damit letztlich zur Generierung einer adaptiven Lichtverteilung vor dem Fahrzeug herangezogen. Die Umweltbedingungen können anhand von Regen- oder Schneesensoren, Lichtsensoren, eines Thermometers und anderer geeigneter Sensoren erfasst werden. Auch ein kombinierter Einsatz mehrerer unterschiedlicher Sensoren zum Erfassen der Verkehrs- und Umweltbedingung ist denkbar.

Ein anderes Lichtmodul der eingangs genannten Art ist aus der DE 103 21 435 A1 bekannt. Dabei kommt eine Blendenanordnung zum Einsatz, die eine um eine quer zur optischen Achse verlaufende, horizontale Drehachse drehbare Freiformwalze umfasst, auf deren Mantelfläche mehrere quer zur optischen Achse verlaufende und zueinander umfangsseitig beabstandete Oberkanten mit unterschiedlichen Konturverläufen ausgebildet sind. Je nach gewünschter Lichtverteilung kann die Walze derart um die Drehachse gedreht werden, dass die entsprechende Oberkante im Strahlengang des von der Lichtquelle ausgesandten und/oder von der Primäroptik gebündelten Lichts eingebracht wird. In diesem Fall bildet die jeweils im Strahlengang angeordnete Oberkante der Walze die wirksame Oberkante der Blendenanordnung.

Die beschriebenen Lichtmodule zur Erzeugung einer adaptiven Lichtverteilung bieten bereits einen gegenüber herkömmlichen Lichtmodulen, die lediglich eine Lichtfunktion (z.B. Abblendlicht, Fernlicht oder Nebellicht) erzeugen oder zwischen verschiedenen Lichtfunktionen umgeschaltet werden konnten, erheblichen Sicherheitsgewinn, da eine Vielzahl unterschiedlicher Lichtfunktionen zur Verfügung steht und für die jeweilige Verkehrs- und Umweltsituation die optimale Lichtverteilung ausgewählt werden kann. Dadurch verbessern sich die Sichtverhältnisse für den Fahrer erheblich, ohne dass eine Blendung anderer Verkehrsteilnehmer, die zu einer Beeinträchtigung der Verkehrssicherheit führen würde, zu befürchten wäre. Dennoch haben die bekannten Lichtmodule noch Potential hinsichtlich einer Verbesserung der Sichtverhältnisse des Fahrers, ohne jedoch zu einer Blendung der anderen Verkehrsteilnehmer zu führen.
Der vorliegenden Erfindung liegt deshalb die Aufgabe zugrunde, eine einfache und kostengünstige Möglichkeit zu schaffen, die Sichtverhältnisse des Fahrers eines Kraftfahrzeugs, insbesondere hinsichtlich potentiell verkehrsgefährdender Objekte im Bereich vor dem Kraftfahrzeug, zu verbessern, ohne jedoch zu einer Blendung anderer Verkehrsteilnehmer zu führen.

Zur Lösung dieser Aufgabe wird ein Lichtmodul mit den Merkmalen von Anspruch 1 vorgeschlagen.

Bei der durch das erfindungsgemäße Lichtmodul erzeugten Lichtverteilung wird also oberhalb der horizontalen Hell-Dunkel-Grenze lediglich ein insbesondere hinsichtlich seiner Erstreckung in horizontaler Richtung sehr begrenzter Bereich ausgeleuchtet. Das hat erhebliche Vorteile gegenüber der an sich bekannten Teilfernlichtverteilung, bei der oberhalb einer horizontalen Hell-Dunkel-Grenze praktisch der gesamte Bereich auf der eigenen Verkehrsseite oder alternativ auf der Gegenverkehrsseite mit einer Fernlichtverteilung ausgeleuchtet wird. Dieser oberhalb der Hell-Dunkel-Grenze angeordnete ausgeleuchtete Bereich kann in horizontaler Richtung beispielsweise derart positioniert sein, dass er den Fahrbahnrand auf der eigenen Verkehrsseite stärker ausleuchtet. Auf diese Weise kann beispielsweise, wenn durch geeignete Sensoren ein potentiell verkehrsgefährdendes Objekt in Form einer Person oder eines Gegenstands am Fahrbahnrand detektiert wird, die abgeblendete Lichtverteilung mit der horizontalen Hell-Dunkel-Grenze und dem oberhalb der Hell-Dunkel-Grenze ausgebildeten ausgeleuchteten Bereich zumindest kurzzeitig aktiviert werden, um mit dem oberhalb der Helldunkelgrenze angeordneten Bereich das detektierte Objekt anzuleuchten. Die Aufmerksamkeit des Fahrers wird dadurch auf das detektierte Objekt gerichtet. Der Fahrer kann dem detektierten und angestrahlten Objekt ausweichen, die Fahrzeuggeschwindigkeit reduzieren oder andere geeignete Maßnahmen zur Vermeidung einer Kollision mit dem Objekt und/ oder einer Gefährdung des Objekts treffen. Durch die vorliegende Erfindung kann also ein erheblicher Sicherheitsgewinn sowohl für den Fahrer als auch für die detektierten Objekte erzielt werden. Gleichzeitig wird eine Blendung vorausfahrender oder entgegenkommender Verkehrsteilnehmer weitgehend vermieden, da die Erstreckung des oberhalb der Hell-Dunkel-Grenze ausgebildeten ausgeleuchteten Bereichs in horizontaler Richtung nur wenige Winkelgrad beträgt und in der Regel nur für relativ kurze Zeit aktiviert wird.

Die horizontale Position des oberhalb der Helldunkelgrenze angeordneten ausgeleuchteten Bereichs der Lichtverteilung kann variiert werden. Dadurch kann der ausgeleuchtete Bereich immer genau auf das detektierte Objekt gerichtet werden und das Objekt deutlich anstrahlen, damit es für den Fahrer unmittelbar erkennbar und identifizierbar ist. Dies ist wichtig, da die vom Fahrer zu wählende Maßnahme zur Vermeidung einer Kollision mit dem Objekt oder einer Gefährdung des Objekts in erster Linie von der Art des Objekts abhängen wird. Bspw. bei spielenden Kindern oder Tieren wird die Wahl der Maßnahme anders ausfallen als bspw. bei Gegenständen.

Erfindungsgemäß wird vorgeschlagen, dass das Lichtmodul Mittel zum horizontalen Verschwenken des Lichtmoduls oder eines Teils davon umfasst, um den ausgeleuchteten Bereich oberhalb der horizontalen Hell-Dunkel-Grenze gezielt auf vor dem Fahrzeug detektierte Objekte zu richten. Auf diese Weise kann der ausgeleuchtete Bereich in horizontaler Richtung gezielt an eine Position bewegt werden, wo potentiell verkehrsgefährdende Objekte, beispielsweise Personen oder Tiere, die vor dem Fahrzeug die Fahrbahn überqueren, detektiert wurden. Durch die geringe Erstreckung des ausgeleuchteten Bereichs in horizontaler Richtung von lediglich einigen Winkelgrad kann das detektierte Objekt gezielt angestrahlt werden, ohne dass vorausfahrende und/oder entgegenkommende Verkehrsteilnehmer geblendet werden.

Das Lichtmodul weist eine Sekundäroptik auf, vorzugsweise in Form einer Projektionslinse, zur Abbildung des an der wirksamen Oberkante der Blendenanordnung vorbeigelangten Lichts auf einer Fahrbahn vor dem Fahrzeug. Die Sekundäroptik bildet die wirksame Oberkante der Blendenanordnung als Hell-Dunkel-Grenze der Lichtverteilung auf der Fahrbahn ab. In diesem Fall wäre das Lichtmodul also als ein sogenanntes Projektionsmodul ausgebildet. Zur Erfüllung des Helligkeitsverlaufs der Helldunkelgrenze oder zur Beseitigung von Farbeffekten an der Helldunkelgrenze ist die Projektionslinse vorzugsweise mit regelmäßigen oder unregelmäßigen Mikrostrukturen versehen, die eine Höhe von etwa 3-30 µm zur Basisfläche der Linse aufweisen. Die Oberfläche der Linse ist bevorzugt plan-konvex oder meniskusförmig.
Gemäß einer vorteilhaften Weiterbildung der vorliegenden Erfindung wird vorgeschlagen, dass der ausgeleuchtete Bereich oberhalb der horizontalen Hell-Dunkel-Grenze eine Erstreckung von etwa 2° horizontal und etwa 3° bis 5° vertikal aufweist. Die Breite des ausgeleuchteten Bereichs wird von einer in etwa vertikal verlaufenden seitlichen Hell-Dunkel-Grenze zur gegenüberliegenden in etwa vertikal verlaufenden seitlichen Hell-Dunkel-Grenze gemessen. Die Höhe des ausgeleuchteten Bereichs wird ausgehend von der horizontalen Hell-Dunkel-Grenze nach oben bis zum oberen Ende des ausgeleuchteten Bereichs gemessen. Selbstverständlich kann der ausgeleuchtete Bereich, insbesondere in vertikaler Richtung, eine Erstreckung von deutlich mehr als 3° aufweisen, was zur Ausleuchtung von Objekten weit oberhalb der Fahrbahn, beispielsweise von Personen auf einer Autobahnbrücke, vorteilhaft ist. Auch die Erstreckung in horizontaler Richtung kann in bestimmten Situationen deutlich mehr als 2° betragen. So ist es beispielsweise denkbar, wenn der ausgeleuchtete Bereich oberhalb der horizontalen Hell-Dunkel-Grenze in horizontaler Richtung derart positioniert ist, dass er den Fahrbahnrand auf der eigenen Verkehrsseite ausleuchtet, dass sich der ausgeleuchtete Bereich relativ weit in Richtung der eigenen Verkehrsseite über den Fahrbahnrand hinaus nach außen erstreckt. Es ist denkbar, dass die Breite und die Höhe des ausgeleuchteten Bereichs oberhalb der Helldunkelgrenze während des bestimmungsgemäßen Betriebs des Lichtmoduls variabel ist. Vorzugsweise ist jedoch die Breite und die Höhe des ausgeleuchteten Bereichs oberhalb der Helldunkelgrenze feststehend und wird während des Betriebs des Lichtmoduls nicht variiert.

Besonders vorteilhaft ist es, wenn die Mittel zum horizontalen Verschwenken des Lichtmoduls zur Realisierung einer dynamischen Kurvenlichtfunktion des Scheinwerfers vorgesehen sind. In diesem Fall könnten zum Verschwenken des ausgeleuchteten Bereichs oberhalb der horizontalen Hell-Dunkel-Grenze Mittel verwendet werden, die eigentlich zu einem anderen Zweck sowieso in dem Lichtmodul beziehungsweise dem Scheinwerfer vorhanden sind. Auf zusätzliche mechanische Bauteile (Aktoren, Getriebe, Koppelelemente etc.) zur Realisierung einer Verschwenkbewegung des oberhalb der Hell-Dunkel-Grenze angeordneten ausgeleuchteten Bereichs in horizontaler Richtung kann somit verzichtet werden.

Gemäß einer bevorzugten Ausführungsform der vorliegenden Erfindung wird vorgeschlagen, dass die Blendenanordnung als eine um eine quer zur optischen Achse verlaufende, horizontale Drehachse drehbare Freiformwalze ausgebildet ist, auf deren Mantelfläche mehrere quer zur optischen Achse verlaufende und zueinander in Umfangsrichtung beabstandete Oberkanten mit unterschiedlichen Konturverläufen ausgebildet sind, wobei eine der Oberkanten die wirksame Oberkante der Blendenanordnung zur Erzeugung der abgeblendeten Lichtverteilung mit oberhalb der Hell-Dunkel-Grenze vorgesehenem ausgeleuchtetem Bereich bildet. Die Oberkante zur Erzeugung der abgeblendeten Lichtverteilung mit oberhalb der Hell-Dunkel-Grenze vorgesehenem ausgeleuchtetem Bereich weist im Wesentlichen den gleichen Verlauf wie eine Oberkante auf, die zur Erzeugung einer Lichtverteilung mit horizontaler Hell-Dunkel-Grenze (z.B. Abblendlicht, Nebellicht o.ä.) dient. Zusätzlich ist jedoch in der Oberkante ein Schlitz vorgesehen, der zur Erzeugung des ausgeleuchteten Bereichs der Lichtverteilung oberhalb der Hell-Dunkel-Grenze dient.

Die horizontale Hell-Dunkel-Grenze kann symmetrisch ausgebildet sind, das heißt die gesamte Hell-Dunkel-Grenze erstreckt sich auf dem vor dem Fahrzeug angeordneten Messschirm geringfügig (etwa -1°) unterhalb der Vertikalen VV. Die horizontale Hell-Dunkel-Grenze kann aber auch asymmetrisch ausgebildet sein, mit einem horizontalen Abschnitt auf der Gegenverkehrsseite und einem demgegenüber höheren Abschnitt auf der eigenen Verkehrsseite. Der Übergang von dem niedrigeren Abschnitt der Hell-Dunkel-Grenze auf der Gegenverkehrsseite zu dem höheren Abschnitt auf der eigenen Verkehrsseite kann entweder stufenförmig oder auf andere Weise, beispielsweise durch einen schrägen Anstieg, insbesondere einen 15°-Anstieg, erfolgen.

In den Freiformwalzen ist der Platz auf der Mantelfläche zur Anordnung der verschiedenen Oberkanten mit unterschiedlichen Konturverläufen beschränkt. Der Abstand in Umfangsrichtung von auf der Mantelfläche aufgebrachten benachbarten Oberkanten muss so groß sein, dass sich benachbarte Oberkanten bei der Erzeugung der gewünschten Lichtverteilung nicht stören. Deshalb können bei einer derart ausgestalteten Blendenanordnung nur eine beschränkte Anzahl an unterschiedlichen Oberkanten auf der Mantelfläche der Walze angeordnet sein. Zur Realisierung der Lichtverteilung mit oberhalb der Hell-Dunkel-Grenze angeordnetem ausgeleuchtetem Bereich wird deshalb vorgeschlagen, die entsprechende Oberkante anstelle einer anderen Oberkante auf der Mantelfläche der Walze anzuordnen. Vorzugsweise wird eine andere Oberkante ersetzt, die zur Erzeugung einer Lichtverteilung dient, die in der Praxis nur selten aktiviert wird. Eine solche Lichtverteilung ist beispielsweise das Teilfernlicht auf der Gegenverkehrsseite. Dieses wird von dem im Bug des Fahrzeugs auf der Gegenverkehrsseite angeordneten Scheinwerfer beziehungsweise einem Lichtmodul dieses Scheinwerfers erzeugt. Der im Bug des Fahrzeugs auf der eigenen Verkehrsseite angeordnete Scheinwerfer bildet das entsprechende Teilfernlicht für die eigene Verkehrsseite. Bei einem vereinfachten Scheinwerfersystem kann lediglich einer der Scheinwerfer des Systems, beispielsweise der auf der Gegenverkehrsseite angeordnete Scheinwerfer, die abgeblendete Lichtverteilung mit oberhalb der Hell-Dunkel-Grenze vorgesehenem ausgeleuchtetem Bereich erzeugen. Selbstverständlich kann bei dem vereinfachten System auch lediglich der auf der eigenen Verkehrsseite angeordnete Scheinwerfer zur Erzeugung der abgeblendeten Lichtverteilung mit oberhalb der Hell-Dunkel-Grenze vorgesehenem ausgeleuchtetem Bereich ausgebildet sein.

Alternativ wird vorgeschlagen, dass die Blendenanordnung mehrere im Wesentlichen quer zur optischen Achse des Lichtmoduls verlaufende und um eine parallel zur optischen Achse angeordnete horizontale Drehachse relativ zueinander bewegbare Blendenelemente aufweist, wobei eine der Oberkanten oder mehrere Oberkanten durch Überlagerung die im Strahlengang angeordnete wirksame Oberkante zur Erzeugung der abgeblendeten Lichtverteilung mit oberhalb der Hell-Dunkel-Grenze vorgesehenem ausgeleuchtetem Bereich bilden. Die wirksame Oberkante ist dabei ähnlich wie eine Oberkante zur Erzeugung einer herkömmlichen abgeblendeten Lichtverteilung mit Helldunkelgrenze ausgebildet, wobei sie im Unterschied zu der Oberkante zur Erzeugung der herkömmlichen abgeblendeten Lichtverteilung einen Schlitz aufweist. Damit die wirksame Oberkante die genannte Kontur aufweist, ist eine Oberkante entweder eines einzigen oder mehrerer Blendenelemente mit einem Schlitz versehen.

Das Lichtmodul kann eine beliebige Lichtquelle aufweisen. Denkbar ist bspw. eine herkömmliche Glühlampe, eine Gasentladungslampe, oder eine Lichtauskoppelfläche eines Lichtleiters. Gemäß einer bevorzugten Ausführungsform wird vorgeschlagen, dass die mindestens eine Lichtquelle eine oder mehrere Halbleiterlichtquellen (LEDs) umfasst.

Die Primäroptik kann bspw. einen Reflektor umfassen. Gemäß einem Ausführungsbeispiel der Erfindung wird jedoch vorgeschlagen, dass die mindestens eine Primäroptik ein oder mehrere optisch wirksame Elemente aus einem transparenten Material aufweist, die das ausgesandte Licht mittels Totalreflexion bündeln. Diese optisch wirksamen Elemente arbeiten ähnlich wie Lichtwellenleiter nach dem Prinzip der Totalreflexion und ermöglichen eine Bündelung des von den Lichtquellen ausgesandten Lichts auf besonders effiziente Weise, insbesondere mit besonders geringen Reflexionsverlusten. Der Einsatz solcher optisch wirksamer Elemente ist insbesondere in Verbindung mit dem Einsatz von Halbleiterlichtquellen vorteilhaft. Dabei ist es denkbar, dass jeder Halbleiterlichtquelle ein eigenes optisches Element zugeordnet ist. Lichtquellen und optische Elemente können in sog. Arrays angeordnet sein. Zur Lösung der der vorliegenden Erfindung zugrundeliegenden Aufgabe wird des Weiteren ein Kraftfahrzeugscheinwerfer vorgeschlagen, der mindestens ein erfindungsgemäßes Lichtmodul aufweist. Besonders bevorzugt ist, wenn bei dem Kraftfahrzeugscheinwerfer das Lichtmodul nach einem der Ansprüche 2 bis 8 ausgebildet ist.

Falls der Kraftfahrzeugscheinwerfer mehrere Lichtmodule aufweist, die eine Grundlichtverteilung und eine Spotlichtverteilung erzeugen, die beide zur Realisierung der abgeblendeten Lichtverteilung überlagert werden, ist es besonders vorteilhaft, wenn das erfindungsgemäß ausgebildete Lichtmodul zur Realisierung der Spotlichtfunktion ausgebildet ist. Das Grundlichtmodul leuchtet den Bereich vor dem Fahrzeug besonders breit aus. Die Grundlichtverteilung weist eine Hell-Dunkel-Grenze, vorzugsweise eine symmetrische Hell-Dunkel-Grenze auf. Zur Erzeugung der abgeblendeten Lichtverteilung wird der Grundlichtverteilung die Spotlichtverteilung überlagert. Auch die Spotlichtverteilung weist vorzugsweise eine Hell-Dunkel-Grenze (symmetrisch oder asymmetrisch) auf. Zur Realisierung einer Kurvenlichtfunktion des Scheinwerfers ist lediglich das Spotlichtmodul in horizontaler Richtung bewegbar. Zur Variation der horizontalen Position des oberhalb der Hell-Dunkel-Grenze vorgesehenen ausgeleuchteten Bereichs der Lichtverteilung kann das Spotlichtmodul in horizontaler Richtung verschwenkt werden. Dadurch wird die abgeblendete Spotlichtverteilung zusammen mit dem oberhalb der Hell-Dunkel-Grenze angeordneten ausgeleuchteten Bereich relativ zur Grundlichtverteilung in horizontaler Richtung bewegt und gezielt auf ein detektiertes Objekt auf, oberhalb oder neben der Fahrbahn gerichtet.

Als eine weitere Lösung der Aufgabe der vorliegenden Erfindung wird ausgehend von dem Scheinwerfersystem der eingangs genannten Art vorgeschlagen, bei dem mindestens ein Lichtmodul von mindestens einem der Scheinwerfer in der erfindungsgemäßen Weise ausgebildet ist. Besonders bevorzugt ist, wenn bei dem Scheinwerfersystem das Lichtmodul nach einem der Ansprüche 2 bis 9 ausgebildet ist.

Gemäß einer vorteilhaften Weiterbildung der Erfindung wird vorgeschlagen, dass nur der auf der Gegenverkehrsseite angeordnete Scheinwerfer des Scheinwerfersystems ein in erfindungsgemäßer Weise ausgebildetes Lichtmodul mit einer derart ausgebildeten Oberkante aufweist, dass es die abgeblendete Lichtverteilung mit dem oberhalb der Hell-Dunkel-Grenze vorgesehenen ausgeleuchteten Bereich erzeugen kann.

Gemäß einer bevorzugten Ausführungsform der vorliegenden Erfindung wird vorgeschlagen, dass das Scheinwerfersystem Mittel zum Erfassen eines Abbilds eines Bereichs vor dem Fahrzeug und Mittel zum Auswerten des erfassten Abbilds zur Detektion von Objekten vor dem Fahrzeug aufweist, wobei die Mittel zum Erfassen des Abbilds eines Bereichs vor dem Fahrzeug als eine Kamera (für sichtbares Licht, IR- oder UV-Strahlen) ausgebildet sind. Selbstverständlich ist es auch denkbar, die Mittel zum Erfassen des Abbilds eines Bereichs vor dem Fahrzeug als Radarsensoren, oder Ultraschallsensoren auszubilden. Es können auch mehrere der genannten oder andere Sensoren gemeinsam zur Detektion von potentiell verkehrsgefährdenden Objekten vor dem Fahrzeug eingesetzt werden. Ebenso ist es denkbar, dass auf bereits im Fahrzeug sowieso schon vorhandene Sensoren zum Erfassen eines Abbilds eines Bereichs vor dem Fahrzeug zurückgegriffen wird. In diesem Fall müssten für die vorliegende Erfindung keine zusätzlichen Sensoren im Kraftfahrzeug vorgesehen werden. Insbesondere ist es vorteilhaft, wenn die Kamera das Abbild durch Empfang und Verarbeitung unsichtbarer IR-Strahlung erfasst und wenn die Kamera Teil eines Nachtsichtsystems des Fahrzeugs ist, welches dem Fahrer des Fahrzeugs das mittels der Kamera erfasste Abbild des Bereichs vor dem Fahrzeug mittels eines Bildschirms oder einer Projektion auf eine Windschutzscheibe des Fahrzeugs oder auf andere Stellen im Fahrzeug präsentiert. Unter Umständen ist das Nachtsichtsystem bereits mit einem System zur Detektion von Objekten vor dem Fahrzeug ausgestattet. Die entsprechenden Signale des Nachtsichtsystems können bspw. von einem Bussystem des Kraftfahrzeugs abgegriffen und zur Steuerung des Lichtmoduls zur Erzeugung der abgeblendeten Lichtverteilung mit dem oberhalb der Helldunkelgrenze angeordneten ausgeleuchteten Bereich herangezogen werden. Das erfindungsgemäße Lichtmodul kann also auf bereits am Fahrzeugbus anliegende Signale zurückgreifen.

Weitere Merkmale und Vorteile der vorliegenden Erfindung werden nachfolgend unter Bezugnahme auf die Figuren näher erläutert. Es zeigen:
- Figur 1: ein Kraftfahrzeug mit einem erfindungsgemäßen Scheinwerfersystem gemäß einer bevorzugten Ausführungsform;
- Figur 2: ein erfindungsgemäßer Kraftfahrzeugscheinwerfer gemäß einer bevorzugten Ausführungsform;
- Figur 3: ein erfindungsgemäßes Lichtmodul gemäß einer ersten bevorzugten Ausführungsform;
- Figur 4: ein erfindungsgemäßes Lichtmodul gemäß einer zweiten bevorzugten Ausführungsform;
- Figur 5: ein erfindungsgemäßes Lichtmodul gemäß einer dritten bevorzugten Ausführungsform;
- Figur 6: eine Blendenanordnung des Lichtmoduls aus Figur 4;

- Figuren 7a und 7b: eine Blendenanordnung des Lichtmoduls aus Figur 3 in verschiedenen Ansichten;
- Figur 8: eine, aus dem Stand der Technik bekannte, auf einem in einem Abstand zu einem Kraftfahrzeug angeordneten Messschirm abgebildete Teilfernlichtverteilung; und
- Figur 9: eine mit einem der erfindungsgemäßen Lichtmodule gemäß der Figuren 3 bis 5 erzielbare Lichtverteilung.

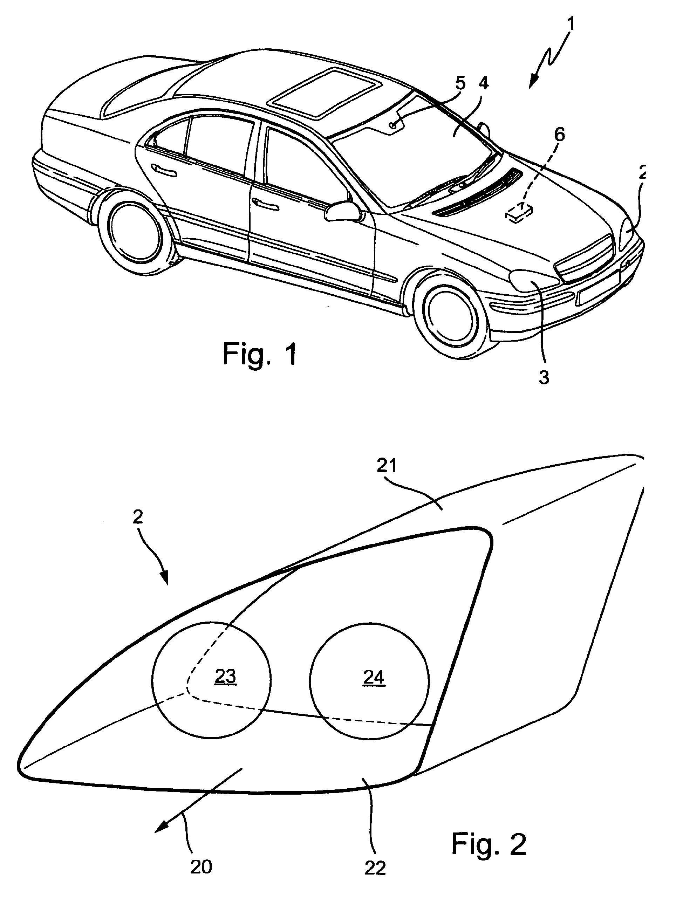

In Figur 1 ist ein Kraftfahrzeug in seiner Gesamtheit mit dem Bezugszeichen 1 bezeichnet. Das beispielhaft dargestellte Fahrzeug 1 ist für Rechtsverkehr ausgelegt. Selbstverständlich ist die vorliegenden Erfindung nicht auf Rechtsverkehr beschränkt, sondern kann in entsprechender Weise auch für Linksverkehr eingesetzt werden. Am Bug des Fahrzeugs sind zwei Scheinwerfer 2, 3 vorgesehen. Jeder der Scheinwerfer 2, 3 umfasst mindestens ein Lichtmodul, das zur Erzeugung einer abgeblendeten Lichtverteilung mit einem oberhalb der Helldunkelgrenze angeordneten ausgeleuchteten Bereich ausgebildet ist. Hinter einer Windschutzscheibe 4 des Fahrzeugs 1 ist ein in Fahrtrichtung gerichteter Sensor 5 in Form einer Kamera angeordnet. Der Sensor 5 erfasst einen Bereich vor dem Fahrzeug 1 und generiert ein entsprechendes Abbild. Das Abbild wird von einem im Fahrzeug 1 angeordneten Rechner 6 verarbeitet, um vor dem Fahrzeug angeordnete Objekte, z.B. Gegenstände, Personen oder Tiere, zu detektieren. In Abhängigkeit von der Position eines detektierten Objekts wird dann mindestens ein Lichtmodul mindestens eines Scheinwerfers 2, 3 derart angesteuert, dass der oberhalb der Helldunkelgrenze angeordnete ausgeleuchtete Bereich das detektierte Objekt anstrahlt. Das Anstrahlen des Objekts kann kurzzeitig einmalig, intermittierend, für eine längere Zeitdauer, maximal bis das Fahrzeug an dem Objekt vorbeigefahren ist, oder auf sonstige Weise erfolgen. Es ist auch denkbar, dass das Objekt mit variierender Helligkeit angestrahlt wird. So wäre es bspw. denkbar, das detektierte Objekt zunächst mit geringer Helligkeit anzustrahlen, um - bspw. falls es sich bei dem Objekt um eine Person oder ein Tier handelt - ein Erschrecken zu vermeiden, und dann die Helligkeit allmählich zu steigern.

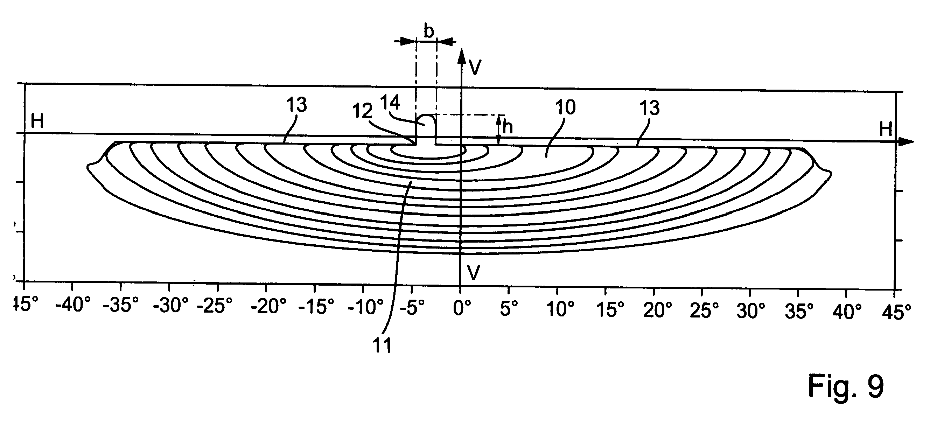

Die von dem mindestens einen Lichtmodul des mindestens einen Scheinwerfers 2, 3 erzeugte abgeblendete Lichtverteilung mit dem oberhalb der Helldunkelgrenze angeordneten ausgeleuchteten Bereich ist in Figur 9 dargestellt. Figur 9 zeigt die Lichtverteilung auf einem vor dem Fahrzeug angeordneten Messschirm. Auf dem Messschirm ist eine Vertikale VV und eine Horizontale HH eingezeichnet. Die Lichtverteilung ist mit dem Bezugszeichen 10 bezeichnet. Die in der Lichtverteilung 10 eingezeichneten Linien 11 sind sog. Isoluxlinien, die Bereiche gleicher Beleuchtungsstärke kennzeichnen. Ein Bereich 12 der Lichtverteilung 10 mit der größten Beleuchtungsstärke liegt bei einem Lichtmodul in horizontaler Nullstellung bei etwa 0° horizontal. Die in Figur 9 gezeigte Lichtverteilung 10 ist um etwa 4°-5° nach links verschwenkt worden. Folglich liegt in dem dargestellten Ausführungsbeispiel der Bereich 12 mit der größten Beleuchtungsstärke bei etwa 4° bis 5° links neben der Vertikalen VV und etwa 1° bis 2° unterhalb der Horizontalen HH.

Die Lichtverteilung 10 umfasst eine Grundlichtverteilung, die nach oben durch eine im wesentlichen horizontale Helldunkelgrenze 13 begrenzt wird. In dem dargestellten Ausführungsbeispiel ist die Helldunkelgrenze 13 symmetrisch ausgebildet, das heißt sie hat sowohl auf der eigenen Verkehrsseite als auch auf der Gegenverkehrsseite in etwa den gleichen horizontalen Verlauf. Selbstverständlich könnte die Helldunkelgrenze 13 auch asymmetrisch ausgebildet sein, wobei ein Abschnitt der Helldunkelgrenze 13 auf der eigenen Verkehrsseite dann oberhalb eines Abschnitts auf der Gegenverkehrsseite angeordnet wäre. Der Übergang zwischen den beiden Abschnitten kann stufenartig oder anderweitig, bspw. mittels eines in einem Winkel von 15° ansteigenden Abschnitts, erfolgen. Die dargestellte Grundlichtverteilung erstreckt sich in horizontaler Richtung von etwa -40° bis +40° und in vertikaler Richtung von etwa -13° bis etwa -1°.

Die Lichtverteilung 10 umfasst außerdem einen oberhalb der Helldunkelgrenze 13 angeordneten ausgeleuchteten Bereich 14, der seitlich zumindest bereichsweise durch annähernd vertikal verlaufende Helldunkelgrenzen begrenzt wird. In dem dargestellten Ausführungsbeispiel verlaufen die seitlichen Helldunkelgrenzen zur Grundlichtverteilung hin im Wesentlichen vertikal und sind nach oben hin nach innen gebogen, so dass der Bereich 14 nach oben hin die Form eines Halbkreises hat. Selbstverständlich kann die Form des Bereichs 14 in der Praxis von der dargestellten Form abweichen. Wichtig ist jedoch, dass der Bereich 14 sowohl in horizontaler als auch in vertikaler Richtung eine Erstreckung von lediglich einigen Grad hat. Die Breite wird dabei von einem Punkt, wo der Gradient der Helligkeitsverteilung einen bestimmten Wert überschreitet, vorzugsweise ein Maximum aufweist, auf der linken Seite des Bereichs 14, zu einem entsprechenden Punkt auf der rechten Seite des Bereichs 14 gemessen. Die genannten Punkte befinden sich üblicherweise am linken Dunkel-Hell-Übergang bzw. am rechten Hell-Dunkel-Übergang des Bereichs 14. In dem dargestellten Ausführungsbeispiel hat der Bereich 14 eine Breite b von etwa 2° und eine Höhe h von etwa 3°. In dem dargestellten Beispiel ist der Bereich 14 oberhalb des Bereichs 12 der Grundlichtverteilung mit der höchsten Beleuchtungsstärke angeordnet. In einem Lichtmodul in horizontaler Nullstellung liegt der Bereich 14 in etwa auf der Vertikalen VV. Aufgrund der Verschwenkung des die Lichtverteilung 10 in Figur 9 erzeugenden Moduls um etwa 4°-5° nach links liegt auch der Bereich 14 in dem dargestellten Ausführungsbeispiel etwa 4°-5° links neben der Vertikalen VV.

Selbstverständlich kann die Lichtverteilung 10 auch anders ausgebildet sein. So ist es bspw. denkbar, dass der Bereich 12 der größten Beleuchtungsstärke in der horizontalen Nullstellung des Lichtmoduls nicht auf der Vertikalen, sondern seitlich versetzt dazu angeordnet ist. Entsprechendes gilt für den ausgeleuchteten Bereich 14 oberhalb der Helldunkelgrenze 13, der in der horizontalen Nullstellung des Moduls ebenfalls seitlich versetzt zur Vertikalen angeordnet sein könnte.

In Figur 2 ist ein Beispiel für einen auf der Gegenverkehrsseite angeordneten Scheinwerfer 2 des Fahrzeugs 1 dargestellt. Der Scheinwerfer 2 umfasst ein in Lichtaustrittsrichtung 20 offenes Gehäuse 21. Die Öffnung des Gehäuses 21 ist durch eine transparente Abdeckscheibe 22 verschlossen. Die Abdeckscheibe 22 kann bereichsweise mit oder ohne optisch wirksame Elemente (z.B. Prismen) ausgebildet sein. Sie besteht aus transparentem Kunststoff oder Glas. Im Inneren des Gehäuses 21 ist mindestens ein Lichtmodul 23, 24 angeordnet. In dem dargestellten Ausführungsbeispiel sind zwei Lichtmodule 23, 24 vorgesehen. Dabei kann das eine Lichtmodul 24 zur Erzeugung einer Grundlichtverteilung, welche eine besonders breite Ausleuchtung der Fahrbahn vor dem Fahrzeug bewirkt, und das andere Lichtmodul 23 zur Erzeugung einer Spotlichtverteilung, die sich in einem zentralen Bereich der Lichtverteilung 10 konzentriert, ausgebildet sein. Die Grundlichtverteilung erstreckt sich in Figur 9 bspw. in horizontaler Richtung von -40° bis +40° und in vertikaler Richtung von -13° bis -1°. Die Spotlichtverteilung erstreckt sich bspw. von -10° bis +2° und in vertikaler Richtung von -4° bis -1°. Selbstverständlich kann insbesondere die Spotlichtverteilung eine von den beispielhaft angegebenen Werten abweichende Erstreckung aufweisen. Eine Überlagerung der beiden Teil-Lichtverteilungen erzeugt die Lichtverteilung 10. Selbstverständlich kann die in Figur 9 gezeigte Lichtverteilung auch durch ein einziges Lichtmodul, bspw. das Lichtmodul 23 alleine, erzeugt werden.

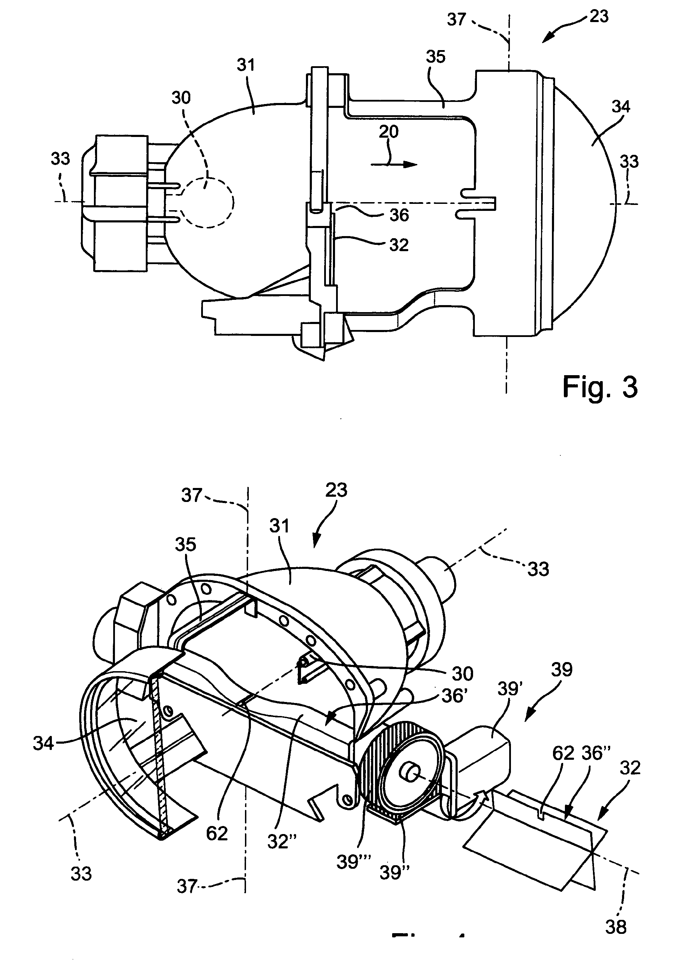

In Figur 3 ist ein Beispiel für das Lichtmodul 23 dargestellt. Das Modul 23 ist als ein Projektionsmodul ausgebildet. Es weist eine Lichtquelle 30 auf, die bspw. als eine Glühlampe, eine Gasentladungslampe, eine Lichtauskoppelfläche eines Lichtleiters oder als mindestens eine Halbleiterlichtquelle (LEDs) ausgebildet sein kann. Das von der Lichtquelle 30 ausgesandte Licht wird von einer Primäroptik 31 gebündelt, die in dem dargestellten Ausführungsbeispiel als ein Reflektor, vorzugsweise als ein ellipsoidförmiger oder Freiformreflektor, ausgebildet ist. Selbstverständlich kann sie auch andersartig ausgebildet sein, bspw. - insbesondere wenn die Lichtquelle LEDs umfasst - als ein transparentes optisches Element, welches das ausgesandte Licht mittels Totalreflexion bündelt. In Lichtaustrittsrichtung 20 nach der Primäroptik 31 ist eine Blendenanordnung 32 im Strahlengang angeordnet, die einen Teil des gebündelten Lichts abschattet. Die Blendenanordnung 32 erstreckt sich in einer im Wesentlichen vertikalen Ebene senkrecht zu einer optischen Achse 33 des Moduls 23 und unterhalb der optischen Achse 33. In Lichtaustrittsrichtung 20 nach der Blendenanordnung 32 ist eine Sekundäroptik 34 im Strahlengang angeordnet, die in der dargestellten Ausführungsform als eine Projektionslinse ausgebildet ist. Die Linse 34 ist mittels eines Halterahmens 35 am vorderen Rand des Reflektors 31 befestigt. Die Projektionslinse 34 projiziert das an der Blendenanordnung 32 vorbei gelangte Licht auf die Fahrbahn vor das Fahrzeug 1. Dabei wird eine Oberkante 36 der Blendenanordnung 32 als Helldunkelgrenze 13 auf die Fahrbahn projiziert. Die Oberkante 36 weist einen der Helldunkelgrenze 13 entsprechenden Verlauf auf. Zur Realisierung einer dynamischen Kurvenlichtfunktion ist das gesamte Projektionsmodul 23 um eine vertikale Drehachse 37 verschwenkbar. Selbstverständlich kann die Kurvenlichtfunktion auch erzielt werden, indem lediglich Teile des Moduls 23, bspw. die Linse 34, verschwenkt werden.

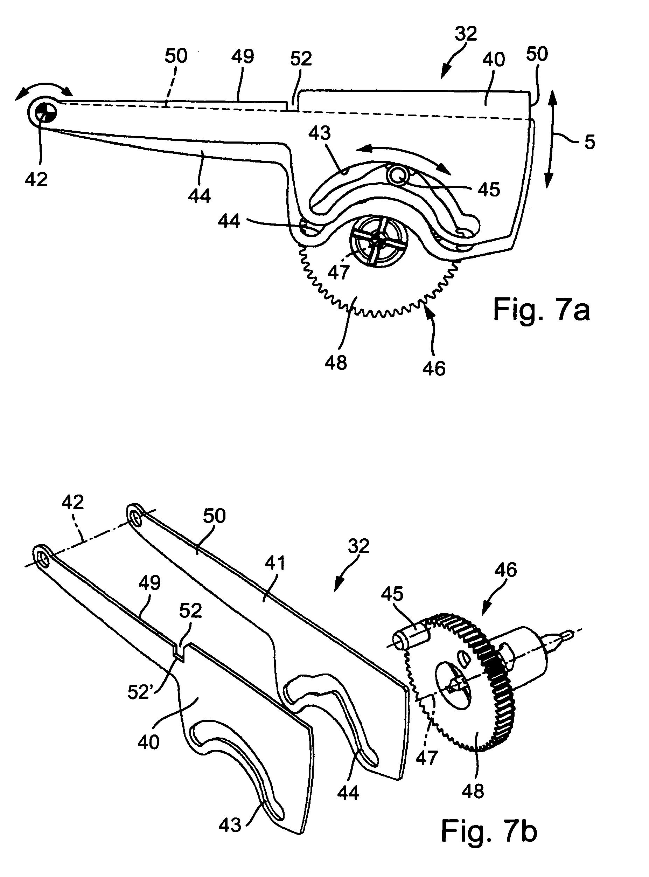

Ein Beispiel für die Ausgestaltung der Blendenanordnung 32 ist in den Figuren 7a und 7b dargestellt. Die Blendenanordnung 32 umfasst mehrere Blendenelemente 40, 41. In dem dargestellten Ausführungsbeispiel sind lediglich zwei Blendenelemente 40, 41 vorgesehen. Diese erstrecken sich in einer im Wesentlichen quer zur optischen Achse 33 des Lichtmoduls 23 verlaufenden vertikalen Ebene. Die Blendenelemente sind um eine im Wesentlichen parallel zur optischen Achse 33 verlaufende Drehachse 42 bewegbar gelagert. Jedes Blendenelement 40, 41 verfügt über eine Führungskulisse 43, 44, die vorzugsweise unterschiedlich ausgebildet sind. In die Kulissen 43, 44 greift ein Führungsstift 45 eines Aktors 46 ein. In dem dargestellten Ausführungsbeispiel ist der Führungsstift 45 exzentrisch an einem um eine Drehachse 47 drehbaren Rad 48 angeordnet. Die Drehachse 47 verläuft vorzugsweise parallel zu der Drehachse 42 der Blendenelemente 40, 41 und zu der optischen Achse 33 des Lichtmoduls 23. Die Blendenelemente 40, 41 weisen Oberkanten 49, 50 mit vorzugsweise unterschiedlichen Konturen auf.
Durch Betätigung des Aktors 46 wird der Führungsstift 45 in den Kulissen 43, 44 bewegt. Da die Drehachsen 42, 47 feststehen, führt eine Bewegung des Stifts 45 in den Kulissen 43, 44 zu einer Verschwenkbewegung 51 der Blendenelemente 40, 41 um die Drehachse 42. Die im Strahlengang angeordnete wirksame Oberkante der gesamten Blendenanordnung 32 ergibt sich aus einer Überlagerung der Oberkanten 49, 50 der beiden Blendenelemente 40, 41. Durch Bewegen des Stifts 45 in den Kulissen 43, 44 kann der Verlauf der wirksamen Oberkante der Blendenanordnung 32 variiert werden. In der in Figur 7a dargestellten Stellung der Blendenelemente 40, 41 relativ zueinander wird die wirksame Oberkante alleine durch die Oberkante 49 des Blendenelements 40 gebildet, da die Oberkante 50 des anderen Blendenelements 41 vollständig von dem Element 40 verdeckt wird.

In der Oberkante 49 des Blendenelements 40 ist ein Schlitz 52 ausgebildet, der zur Erzeugung des oberhalb der Helldunkelgrenze 13 angeordneten ausgeleuchteten Bereichs 14 der Lichtverteilung 10 dient. In dem dargestellten Ausführungsbeispiel wird der Bereich 14 allein durch den Schlitz 52 in der Oberkante 49 erzeugt. Es wäre jedoch auch denkbar, dass der Bereich 14 durch ein Zusammenwirken beider Oberkanten 49, 50 der Blendenelemente 40, 41 erzeugt wird. Durch Anheben des Blendenelements 41 relativ zum Blendenelement 40 könnte bspw. die Oberkante 50 über einen im Wesentlichen horizontalen Bodenabschnitt 52' des Schlitzes 52 hinaus angehoben werden, so dass die Oberkante 50 die Höhe h des ausgeleuchteten Bereichs 14 oberhalb der Helldunkelgrenze 13 bestimmt. Damit ließe sich auch eine dynamische Variation der Höhe h des Bereichs 14 erzielen.

Durch Verschwenken des Lichtmoduls 23 oder von Teilen davon um die vertikale Schwenkachse 37 kann der Bereich 14 oberhalb der Helldunkelgrenze 13 der Lichtverteilung 10 in horizontaler Richtung verschwenkt werden. Damit kann der ausgeleuchtete Bereich 14 gezielt auf vor dem Fahrzeug 1 detektierte Objekte gerichtet werden. Die Aufmerksamkeit des Fahrers wird dadurch besonders stark auf die potentiell gefährdenden Objekte gerichtet. Die detektierten Objekte werden also in der real existierenden Umwelt hervorgehoben und nicht auf irgend einer Darstellung (z.B. auf einem Bildschirm) oder Projektion (z.B. auf der Windschutzscheibe oder einem transparenten Körper im Blickfeld des Fahrers) der Umwelt. Der Fahrer kann seine gesamte Aufmerksamkeit stets auf die Fahrbahn vor seinem Fahrzeug 1 richten und muss die Augen nicht abwenden, um auf Bildschirme, Projektionen oder Warnleuchten zu sehen. Durch die vorliegende Erfindung ergibt sich somit ein entscheidender Sicherheitsgewinn für den Fahrer sowie die detektierten Objekte, ohne dass dadurch andere Verkehrsteilnehmer geblendet oder auf andere Weise gefährdet werden.

In Figur 4 ist ein weiteres Beispiel für das Lichtmodul 23 dargestellt. Das Modul 23 weist große Ähnlichkeit zu dem in Figur 3 gezeigten Modul auf. Entsprechende Bauteile sind mit den gleichen Bezugszeichen bezeichnet worden. Das Modul 23 aus Figur 4 unterscheidet sich von dem in Figur 3 gezeigten insbesondere durch die Ausgestaltung und Funktionsweise der Blendenanordnung 32'. Die Blendenanordnung 32' ist als eine Freiformwalze ausgebildet, auf deren Mantelfläche verschiedene Oberkanten 36' mit unterschiedlichen Konturverläufen ausgebildet sind. Die Walze ist um eine quer zur optischen Achse 33 des Lichtmoduls 23 und in etwa horizontal verlaufende Drehachse 38 drehbar. Zur Ausführung der Drehbewegung der Walze 32' ist ein Aktor 39 umfassend einen Elektromotor 39', insbesondere einen Schrittmotor, einen von diesem angetriebenes Schneckenrad 39" sowie ein von dem Schneckenrad angetriebenes Zahnrad 39"', welches drehfest mit der Walze 32'in Verbindung steht. Durch Drehen der Blendenanordnung 32' kann eine der Oberkanten 36' als wirksame Oberkante in den Strahlengang des Moduls 23 bewegt werden. Die wirksame Oberkante 36' wird dann von der Projektionslinse 34 als Helldunkelgrenze auf die Fahrbahn vor das Kraftfahrzeug projiziert.

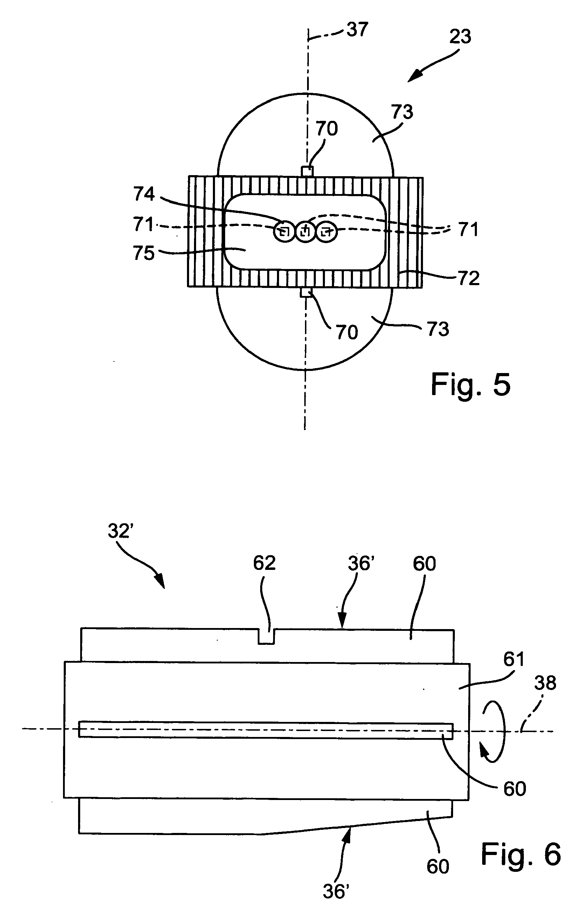

Mit dem Bezugszeichen 32" ist in Figur 4 eine symbolische Darstellung der Freiformwalze 32' zur Veranschaulichung von deren Funktionsweise wiedergegeben. In dem Beispiel sind auf der Mantelfläche der Walze 32" vier verschiedene Blendenelemente mit Oberkanten 36" mit unterschiedlichen Konturverläufen angeordnet. Die einzelnen Blendenelemente bzw. deren Oberkanten 36" haben in Umfangsrichtung einen Abstand von etwa 90° zueinander. Zur vereinfachten Darstellung weisen die Oberkanten 36" der symbolischen Darstellung der Walze 32" alle einen horizontalen Verlauf auf. Mit einem solchen könnte eine symmetrische Helldunkelgrenze erzeugt werden. Tatsächlich können die Oberkanten 36" auch einen anderen Verlauf, bspw. zur Erzeugung einer asymmetrischen Helldunkelgrenze, aufweisen. Ein solches Ausführungsbeispiel einer Freiformwalze 32" ist bspw. in Figur 6 dargestellt.

In Figur 6 sind die einzelnen Blendenelemente mit dem Bezugszeichen 60 bezeichnet. Diese können - in Abweichung von der dargestellten Ausführungsform - auch integraler Bestandteil des Walzenkörpers 61 sein. Sie weisen Oberkanten 36' mit unterschiedlichen Konturverläufen auf. Das in Figur 6 nach unten gerichtete Blendenelement 60 dient zur Erzeugung einer herkömmlichen Abblendlichtverteilung mit asymmetrischer Helldunkelgrenze, wie sie in Europa üblich ist. Deshalb weist das untere Blendenelement einen horizontalen Abschnitt auf der linken Seite und auf der rechten Seite einen in einem Winkel von etwa 15° abfallenden Abschnitt auf. Das nach oben gerichtete Blendenelement 60 ist im Strahlengang des Lichtmoduls 23 aus Figur 4 angeordnet und bildet deshalb die sog. wirksame Oberkante 36'. Die Oberkante 36' des oberen Blendenelements 60 ist zur Erzeugung der in Figur 9 dargestellten Lichtverteilung ausgebildet. Insbesondere erzeugt der im Wesentlichen horizontale Verlauf der Oberkante 36' die symmetrische Helldunkelgrenze 13 der Lichtverteilung 10. Zudem ist ein Schlitz 62 in Verlauf der Oberkante 36' eingebracht, der zur Erzeugung des ausgeleuchteten Bereichs 14 oberhalb der Helldunkelgrenze 13 dient.

Ein drittes Ausführungsbeispiel für ein Lichtmodul 23 ist in Figur 5 in einer Ansicht von vorne, das heißt entgegen der Lichtaustrittsrichtung 20, gezeigt. Dieses Modul 23 umfasst eine Kombination aus Reflexions- und Projektionsmodul. Als Lichtquellen kommen LEDs 70, 71 zum Einsatz. Diese sind auf einem Kühlkörper 72 angeordnet.

Auf der Oberseite und der Unterseite des Kühlkörpers 72 sind erste LEDs 70 angeordnet. Das von diesen ausgesandte Licht wird durch Primäroptiken in Form von Halbschalenreflektoren 73 in Lichtaustrittsrichtung 20 reflektiert. Die LEDs 70 und die Reflektoren 73 bilden ein Reflexionsmodul des Lichtmoduls 23. Das Reflexionsmodul kann eine breite Grundlichtverteilung erzeugen, die ähnlich oder gleich der von dem zweiten Lichtmodul 24 des Scheinwerfers 2 erzeugten Lichtverteilung ist.

Auf der Vorderseite des Kühlkörpers 72 sind weitere LEDs 71 angeordnet. Das von diesen ausgesandte Licht wird durch eine Primäroptik in Form von Vorsatzoptiken 74 aus einem transparenten Material mit totalreflektierenden Eigenschaften gebündelt. Das gebündelte Licht wird von einer Sekundäroptik in Form einer Projektionslinse 75 in Lichtaustrittsrichtung 20 projiziert. Die LEDs 71, die Vorsatzoptiken 74 und die Linse 75 bilden ein Projektionsmodul des Lichtmoduls 23. Das Projektionsmodul kann eine Spotlichtverteilung erzeugen. Eine Überlagerung der Grundlichtverteilung des Reflexionsmoduls und der Spotlichtverteilung ergeben die gewünschte resultierende Lichtverteilung des Moduls 23.

Im Strahlengang des Reflexions- und/oder des Projektionsmoduls ist eine Blendenanordnung zur Realisierung einer wirksamen Oberkante vorgesehen, welche zur Erzeugung einer abgeblendeten Lichtverteilung 10 mit symmetrischer oder asymmetrischer Helldunkelgrenze 13 mit einem oberhalb der Helldunkelgrenze 13 angeordneten ausgeleuchteten Bereich 14 geeignet ist. Das gesamte Modul 23 oder Teile davon, bspw. die Projektionslinse 75, können um die vertikale Drehachse 37 verschwenkt werden, damit der ausgeleuchtete Bereich 14 in horizontaler Richtung verschwenkt und gezielt auf vor dem Fahrzeug 1 detektierte Objekte gerichtet werden kann.

Wie man anhand der in Figur 6 gezeigten Blendenanordnung in Form der Freiformwalze 32' erkennen kann, gibt es auf der Mantelfläche des Walzenkörpers 61 nur einen beschränkten Platz für die verschiedenen Blendenelemente 60. In dem beschriebenen Ausführungsbeispiel sind vier Blendenelemente 60 auf der Umfangsfläche der Walze 32' angeordnet. In der Praxis können etwa bis zu fünf oder sechs Blendenelemente 60 angeordnet werden, ohne dass die Erzeugung der Lichtverteilung durch die wirksame Oberkante 36' eines Blendenelements 60 durch benachbarte Blendenelemente 60 gestört wird. Das bedeutet also, dass mit der Blendenanordnung 32' maximal sechs verschiedene Lichtverteilungen erzeugt werden können. Dies sind in der Praxis bspw. herkömmliches asymmetrisches Abblendlicht, Landstraßenlicht, Teilfernlicht und Fernlicht. Zusätzliche Oberkantenkonturen für weitere adaptive Funktionen wie Autobahnlicht oder Stadtlicht, können zusätzlich vorgesehen werden. Zwischen den verschiedenen Lichtfunktionen kann je nach Verkehrsaufkommen vor dem Fahrzeug und/oder Umweltbedingungen im Umfeld des Fahrzeugs automatisch umgeschaltet werden. Für automatisches Fernlicht darf sich kein anderes Fahrzeug im Verkehrsraum vor dem Fahrzeug im Erfassungsbereich der Kamera 5 befinden. Sobald ein Fahrzeug im Bildbereich der Kamera 5 auftaucht, muss die Ausleuchtung im Fernlichtbereich in Richtung dieser Fahrzeuge auf das Abblendlichtniveau reduziert werden, um keine übermäßige Blendung zu erzeugen. Dies kann mittels einer Teilfernlichtfunktion erfolgen.

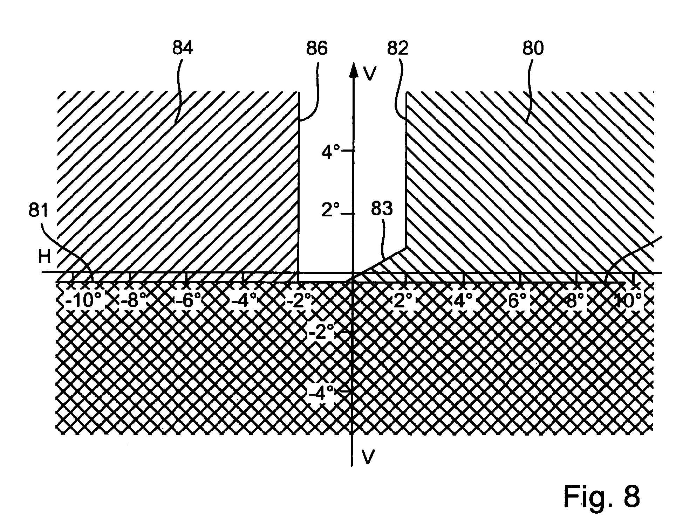

Eine auf einem vor dem Fahrzeug 1 angeordneten Messschirm abgebildete Teilfernlichtverteilung ist beispielhaft in Figur 8 dargestellt. Der Scheinwerfer 3 auf der eigenen Verkehrsseite erzeugt eine Teilfernlichtverteilung 80 auf der eigenen Verkehrsseite. Die Verteilung 80 erstreckt sich auf der Gegenverkehrsseite unterhalb einer im Wesentlichen horizontalen Helldunkelgrenze 81 bei etwa -0,3°. Die Helldunkelgrenze 81 erstreckt sich vom äußeren Fahrbahnrand der Gegenverkehrsseite bis etwa 2° auf der eigenen Verkehrsseite. Dort geht sie dann über in eine im Wesentlichen vertikale Helldunkelgrenze 82, wobei sich die Teilfernlichtverteilung 80 rechts davon erstreckt. Der Übergang von der horizontalen Helldunkelgrenze 81 zu der vertikalen Helldunkelgrenze 82 rechtwinklig, kurvig oder auf andere Weise, bspw. mittels einer Schräge 83, erfolgen. Durch die Teilfernlichtverteilung 80 wird die eigene Verkehrsseite nach Art eines Fernlichts und die Gegenverkehrsseite nach Art eines Abblendlichts ausgeleuchtet. Sie wird aktiviert, wenn keine vorausfahrende, sondern lediglich entgegenkommende Fahrzeuge erkannt wurden.

In entsprechender Weise arbeitet die Teilfernlichtverteilung 84 auf der Gegenverkehrsseite, die von dem anderen auf der Gegenverkehrsseite des Fahrzeugs 1 angeordneten Scheinwerfer 2 erzeugt wird. Die Verteilung 84 wird durch eine horizontale Helldunkelgrenze 85 bei etwa -0,3° in vertikaler Richtung und eine im Wesentlichen vertikale Helldunkelgrenze 86 bei etwa -2° in horizontaler Richtung begrenzt und leuchtet die Gegenverkehrsseite nach Art eines Fernlichts und die eigene Verkehrsseite nach Art eines Abblendlichts aus. Die Teilfernlichtverteilung 84 wird üblicherweise aktiviert, wenn zwar vorausfahrende, aber keine entgegenkommenden Fahrzeuge erkannt wurden. In der Praxis wird die Teilfernlichtverteilung 84 auf der Gegenverkehrsseite seltener aktiviert. Wenn die horizontale Ausrichtung sowie die Breite des Teilfernlichts variiert werden können, kann das Teilfernlicht auch bei vorausfahrenden oder entgegenkommenden Verkehrsteilnehmern aktiviert werden, wobei das Teilfernlicht dann so eingestellt werden muss, dass ein Schattenbereich der Lichtverteilung genau die vorausfahrenden und/oder entgegenkommenden Verkehrsteilnehmer abdeckt.

Falls für ein weiteres Blendenelement 60 zur Erzeugung der weiteren Lichtfunktion in Form der abgeblendeten Lichtverteilung 10 mit oberhalb der Helldunkelgrenze 13 angeordnetem ausgeleuchtetem Bereich 14 auf der Mantelfläche des Walzenkörpers 61 kein Platz besteht, kann ein Blendenelement 60 für eine vorhandene Lichtfunktion durch das Blendenelement 60 zur Erzeugung der weiteren Lichtfunktion ersetzt werden. Dabei bietet es sich an, das Blendenelement 60 des Lichtmoduls 23 des Scheinwerfers 2 auf der Gegenverkehrsseite, das zur Realisierung einer wirksamen Oberkante 36' zur Erzeugung der Teilfernlichtverteilung 84 auf der Gegenverkehrsseite ausgebildet ist, durch das Blendenelement 60 zur Erzeugung der abgeblendeten Lichtverteilung 10 mit oberhalb der Helldunkelgrenze 13 angeordnetem ausgeleuchtetem Bereich 14 zu ersetzen.

Entsprechende Platzprobleme können sich auch bei einer Blendenanordnung 32 nach Figur 7a, 7b ergeben, da die wirksame Oberkante 36 der Blendenanordnung 32 möglichst in einem Brennpunkt des Reflektors 31 angeordnet sein sollte, was bei einer Vielzahl von in Richtung der optischen Achse 33 des Lichtmoduls 23 hintereinander angeordneten einzelnen Blendenelementen 40, 41 immer schwieriger wird. Aus diesem Grund kann auch hier Abhilfe geschafft werden, indem die Blendenelemente 40, 41 und gegebenenfalls weitere Blendenelemente so ausgebildet werden, dass sie - -in einer entsprechenden Position des Führungsstifts 45 in den Kulissenführungen 43, 44 statt eines Teilfernlichts auf der Gegenverkehrsseite, die abgeblendete Lichtverteilung 10 mit dem oberhalb der Helldunkelgrenze 13 angeordneten ausgeleuchteten Bereich 14 erzeugen können.

Das bevorzugte Scheinwerfersystem des Fahrzeugs 1 umfasst also den Scheinwerfer 2 auf der Gegenverkehrsseite, dessen eines Lichtmodul 23 eine Blendenanordnung 32, 32' zur Erzeugung einer adaptiven Lichtverteilung aufweist. Die Blendenanordnung 32, 32' ist derart ausgebildet, dass sie zumindest herkömmliches asymmetrisches Abblendlicht, Landstraßenlicht, Fernlicht und die abgeblendete Lichtverteilung 10 mit dem oberhalb der Helldunkelgrenze 13 angeordneten ausgeleuchteten Bereich 14 erzeugen kann. Zusätzlich kann sie noch Autobahn- oder Stadtlicht erzeugen. Die Teilfernlichtverteilung 84 auf der Gegenverkehrsseite kann der Scheinwerfer 2 also nicht erzeugen. Der Scheinwerfer 3 auf der eigenen Verkehrsseite weist ebenfalls ein Lichtmodul mit einer Blendenanordnung zur Erzeugung einer adaptiven Lichtverteilung auf. Allerdings ist die Blendenanordnung derart ausgebildet, dass sie zumindest herkömmliches asymmetrisches Abblendlicht, Landstraßenlicht, Fernlicht und eine Teilfernlichtverteilung 80 auf der eigenen Verkehrsseite erzeugen kann. Zusätzlich kann sie noch Autobahn- oder Stadtlicht erzeugen. Die abgeblendete Lichtverteilung 10 mit dem oberhalb der Helldunkelgrenze 13 angeordneten ausgeleuchteten Bereich 14 wird von dem Scheinwerfer 3 nicht erzeugt.

Selbstverständlich ist es jedoch denkbar, dass beide Scheinwerfer 2, 3 des Fahrzeugs 1 die abgeblendete Lichtverteilung 10 mit dem oberhalb der Helldunkelgrenze 13 angeordneten ausgeleuchteten Bereich 14 erzeugen können.

## Patentansprüche

1. Lichtmodul (23) für einen Kraftfahrzeugscheinwerfer (2), zur Erzeugung einer adaptiven Lichtverteilung, das Lichtmodul (23) umfassend
- mindestens eine Lichtquelle (30; 70, 71) zum Aussenden von Licht,
- mindestens eine Primäroptik (31; 73, 74) zum Bündeln des ausgesandten Lichts,
- eine Blendenanordnung (32; 32') zur Realisierung einer variablen wirksamen Oberkante (36; 36'), die in einen Strahlengang des ausgesandten und/oder gebündelten Lichts eingebracht werden kann, und
- eine Sekundäroptik (34; 75), vorzugsweise in Form einer Projektionslinse, zur Abbildung des an der wirksamen Oberkante (36; 36') der Blendenanordnung (32; 32') vorbei gelangten Lichts auf einer Fahrbahn vor dem Fahrzeug (1), wobei die Blendenanordnung (32; 32') zur Realisierung einer wirksamen Oberkante (36; 36') ausgebildet ist, welche die Erzeugung einer abgeblendeten Lichtverteilung (10) mit im Wesentlichen horizontaler Helldunkelgrenze (13) und mit einem an einer bestimmten horizontalen Position oberhalb der Helldunkelgrenze (13) ausgebildeten ausgeleuchteten Bereich (14) bewirkt, der rechts und links durch Helldunkelgrenzen begrenzt ist und auf einem in einem Abstand vor dem Scheinwerfer anordenbaren Messschirm eine Erstreckung in horizontaler und vertikaler Richtung von jeweils einigen Winkelgrad aufweist, **dadurch gekennzeichnet, dass** das Lichtmodul (23) Mittel zum horizontalen Verschwenken des Lichtmoduls (23) oder eines Teils (75) davon umfasst, um den ausgeleuchteten Bereich (14) oberhalb der horizontalen Helldunkelgrenze (13) gezielt auf vor dem Fahrzeug (1) detektierte Objekte zu richten.

2. Lichtmodul (23) nach Anspruch 1, **dadurch gekennzeichnet, dass** der ausgeleuchtete Bereich (14) rechts und links zumindest teilweise durch vertikale Helldunkelgrenzen begrenzt ist.

3. Lichtmodul (23) nach Anspruch 1 oder 2, **dadurch gekennzeichnet, dass** der ausgeleuchtete Bereich (14) oberhalb der horizontalen Helldunkelgrenze (13) eine Erstreckung von etwa 2° horizontal und etwa 3° bis 5° vertikal aufweist.

4. Lichtmodul (23) nach einem der vorangehenden Ansprüche, **dadurch gekennzeichnet, dass** die Mittel zum horizontalen Verschwenken des Lichtmoduls (23) zur Realisierung einer dynamischen Kurvenlichtfunktion des Scheinwerfers (2) vorgesehen sind.

5. Lichtmodul (23) nach einem der Ansprüche 1 bis 4, **dadurch gekennzeichnet, dass** die Blendenanordnung (32; 32') eine um eine quer zur optischen Achse (33) verlaufende, horizontale Drehachse (38) drehbare Walze (32'; 61) aufweist, auf deren Mantelfläche mehrere zueinander beabstandete, quer zur optischen Achse (33) verlaufende Oberkanten (36') mit unterschiedlichen Verläufen ausgebildet sind, wobei eine der Oberkanten die wirksame Oberkante (36') zur Erzeugung der abgeblendeten Lichtverteilung (10) mit oberhalb der Helldunkelgrenze (13) vorgesehenem ausgeleuchtetem Bereich (14) bildet.

6. Lichtmodul (23) nach einem der Ansprüche 1 bis 4, **dadurch gekennzeichnet, dass** die Blendenanordnung (32; 32') mehrere im Wesentlichen quer zur optischen Achse (33) verlaufende und um eine parallel zur optischen Achse (33) angeordnete horizontale Drehachse (42) relativ zueinander bewegbare Blendenelemente (40, 41) aufweist, wobei eine der Oberkanten (49) oder mehrerer Oberkanten (49, 50) durch Überlagerung die wirksame Oberkante (36) zur Erzeugung der abgeblendeten Lichtverteilung (10) mit oberhalb der Helldunkelgrenze (13) vorgesehenem ausgeleuchtetem Bereich (14) bilden.

7. Lichtmodul (23) nach einem der Ansprüche 1 bis 6, **dadurch gekennzeichnet, dass** die mindestens eine Lichtquelle eine oder mehrere Halbleiterlichtquellen (70, 71) umfasst.

8. Lichtmodul (23) nach Anspruch 7, **dadurch gekennzeichnet, dass** die mindestens eine Primäroptik ein oder mehrere optisch wirksame Elemente (74) aufweist, die das ausgesandte Licht mittels Totalreflexion bündeln.

9. Kraftfahrzeugscheinwerfer (2) mit einem Lichtmodul (23) zur Erzeugung einer adaptiven Lichtverteilung, das Lichtmodul (23) umfassend
- mindestens eine Lichtquelle (30; 70, 71) zum Aussenden von Licht,
- mindestens eine Primäroptik (31; 73, 74) zum Bündeln des ausgesandten Lichts,
- eine Blendenanordnung (32; 32') zur Realisierung einer variablen wirksamen Oberkante (36; 36'), die in einen Strahlengang des ausgesandten und/oder gebündelten Lichts eingebracht werden kann, und
- eine Sekundäroptik (34; 75), vorzugsweise in Form einer Projektionslinse, zur Abbildung des an der wirksamen Oberkante (36; 36') der Blendenanordnung (32; 32') vorbei gelangten Lichts auf einer Fahrbahn vor dem Fahrzeug (1), wobei die Blendenanordnung (32; 32') zur Realisierung einer wirksamen Oberkante (36, 36') ausgebildet ist, welche die Erzeugung einer abgeblendeten Lichtverteilung (10) mit im Wesentlichen horizontaler Helldunkelgrenze (13) und mit einem an einer bestimmten horizontalen Position oberhalb der Helldunkelgrenze (13) ausgebildeten ausgeleuchteten Bereich (14) bewirkt, der rechts und links durch Helldunkelgrenzen begrenzt ist und auf einem in einem Abstand vor dem Scheinwerfer (2) angeordneten Messschirm eine Erstreckung in horizontaler und vertikaler Richtung von jeweils einigen Winkelgrad aufweist, **dadurch gekennzeichnet, dass** das Lichtmodul (23) Mittel zum horizontalen Verschwenken des Lichtmoduls (23) oder eines Teils (75) davon umfasst, um den ausgeleuchteten Bereich (14) oberhalb der horizontalen Helldunkelgrenze (13) gezielt auf vor dem Fahrzeug (1) detektierte Objekte zu richten.

10. Kraftfahrzeugscheinwerfer (2) nach Anspruch 9, **dadurch gekennzeichnet, dass** das Lichtmodul (23) zur Realisierung einer Spotlichtfunktion ausgebildet ist und der Scheinwerfer (2) ein weiteres Lichtmodul (24) zur Realisierung einer Grundausleuchtung aufweist, wobei beide Lichtmodule (23, 24) zusammen die abgeblendete Lichtverteilung (10) bilden.

11. Scheinwerfersystem für ein Kraftfahrzeug (1) zur Ausleuchtung einer Fahrbahn vor dem Kraftfahrzeug mit einer adaptiven Lichtverteilung, das Scheinwerfersystem umfassend am Bug des Fahrzeugs (1) jeweils mindestens einen Kraftfahrzeugscheinwerfer (3) auf der eigenen Verkehrsseite und einen Scheinwerfer (2) auf der Gegenverkehrsseite, Mittel (5) zum Erfassen eines Abbilds eines Bereichs vor dem Fahrzeug (1) und Mittel (6) zum Auswerten des erfassten Abbilds zur Detektion von Objekten vor dem Fahrzeug (1), wobei mindestens einer der Scheinwerfer (2, 3) mindestens ein Lichtmodul (23, 24) zur Erzeugung einer adaptiven Lichtverteilung aufweist, das Lichtmodul (23, 24) umfassend
- mindestens eine Lichtquelle (30; 70, 71) zum Aussenden von Licht,
- mindestens eine Primäroptik (31; 73, 74) zum Bündeln des ausgesandten Lichts,
- eine Blendenanordnung (32; 32') zur Realisierung einer variablen wirksamen Oberkante (36; 36'), die in einen Strahlengang des ausgesandten und/oder gebündelten Lichts eingebracht werden kann, und
- eine Sekundäroptik (34; 75), vorzugsweise in Form einer Projektionslinse, zur Abbildung des an der wirksamen Oberkante (36; 36') der Blendenanordnung (32; 32') vorbei gelangten Lichts auf einer Fahrbahn vor dem Fahrzeug (1), die Blendenanordnung (32; 32') zumindest eines der Lichtmodule (23) mindestens eines Scheinwerfers (2) zur Realisierung einer wirksamen Oberkante (36; 36') ausgebildet ist, welche die Erzeugung einer abgeblendeten Lichtverteilung (10) mit im Wesentlichen horizontaler Helldunkelgrenze (13) und mit einem an einer bestimmten horizontalen Position oberhalb der Helldunkelgrenze (13) ausgebildeten ausgeleuchteten Bereich (14) bewirkt, der rechts und links durch Helldunkelgrenzen begrenzt ist und auf einem in einem Abstand vor dem Scheinwerfer (2) angeordneten Messschirm eine Erstreckung in horizontaler und vertikaler Richtung von jeweils einigen Winkelgrad aufweist, **dadurch gekennzeichnet, dass** mindestens eines der Lichtmodule (23, 24) Mittel zum horizontalen Verschwenken des mindestens einen Lichtmoduls (23, 24) oder eines Teils (75) davon umfasst, um den ausgeleuchteten Bereich (14) oberhalb der horizontalen Helldunkelgrenze (13) gezielt auf vor dem Fahrzeug (1) detektierte Objekte zu richten.

12. Scheinwerfersystem nach Anspruch 11, **dadurch gekennzeichnet, dass** nur der auf der Gegenverkehrsseite angeordnete Scheinwerfer (2) ein Lichtmodul (23) mit einer Blendenanordnung (32; 32') aufweist, die zur Realisierung einer Oberkante (36; 36') ausgebildet ist, welche die Erzeugung der abgeblendeten Lichtverteilung (10) mit dem oberhalb der Helldunkelgrenze (13) ausgebildeten ausgeleuchteten Bereich (14) bewirkt.

13. Scheinwerfersystem Anspruch 11 oder 12, **dadurch gekennzeichnet, dass** die Mittel (5) zum Erfassen des Abbilds eines Bereichs vor dem Fahrzeug (1) als eine Kamera ausgebildet sind, vorzugsweise als eine Kamera (5), die das Abbild durch Empfang und Verarbeitung unsichtbarer IR-Strahlung erfasst.

14. Scheinwerfersystem nach Anspruch 13, **dadurch gekennzeichnet, dass** die Kamera (5) Teil eines Nachtsichtsystems des Fahrzeugs (1) ist, welches dem Fahrer des Fahrzeugs (1) das mittels der Kamera (5) erfasste Abbild des Bereichs vor dem Fahrzeug (1) mittels eines Bildschirms oder einer Projektion auf eine Windschutzscheibe des Fahrzeugs (1) präsentiert.

## Claims

1. A light module (23) for a motor vehicle headlamp (2) for generating an adaptive light distribution, the light module (23) comprising
- at least one light source (30; 70, 71) for emitting light,
- at least one primary optical element (31; 73, 74) for bundling the emitted light,
- a diaphragm arrangement (32; 32') for implementing a variable effective upper edge (36; 36'), which can be introduced into a beam path of the emitted and/or bundled light, and
- a secondary optical element (34; 75), preferably in the form of a projection lens, for imaging the light passing the effective upper edge (36; 36') of the diaphragm arrangement (32; 32') on a roadway in front of the vehicle (1), wherein the diaphragm arrangement (32; 32') is designed to implement an effective upper edge (36; 36') which brings about the generation of a low beam light distribution (10) with a substantially horizontal light-dark boundary (13) and with an illuminated region (14) formed at a specific horizontal position above the light-dark boundary (13), which region is delimited on the right-hand side and on the left-hand side by light-dark boundaries and has an extent in the horizontal and vertical directions of in each case a few angular degrees on a measuring screen arranged at a distance in front of the headlamp (2), **characterized in that** the light module (23) comprises means for horizontally pivoting the light module (23) or a part (75) thereof, in order to specifically direct the illuminated region (14) above the horizontal light-dark boundary (13) towards objects detected in front of the vehicle (1).

2. The light module (23) as claimed in claim 1, wherein the illuminated region (14) is delimited on the right-hand side and on the left-hand side at least partially by vertical light-dark boundaries.

3. The light module (23) as claimed in claim 1 or 2, wherein the illuminated region (14) above the horizontal light-dark boundary (13) has an extent of approximately 2° horizontal and approximately 3° to 5° vertical.

4. The light module (23) as claimed in one of the proceeding claims, wherein the means for horizontally pivoting the light module (23) are provided for implementing a dynamic cornering light function of the headlamp (2).

5. The light module (23) as claimed in one of claims 1 to 4, wherein the diaphragm arrangement (32; 32') has a drum (32'; 61), which is capable of rotating about a horizontal axis of rotation (38) running transversely with respect to the optical axis (33), with a plurality of upper edges (36'), which are spaced apart from one another, run transversely with respect to the optical axis (33) and have different profiles, being formed on the outer surface of said drum, wherein one of the upper edges forms the effective upper edge (36') for generating the low beam light distribution (10) with the illuminated region (14) provided above the light-dark boundary (13).

6. The light module (23) as claimed in one of claims 1 to 4, wherein the diaphragm arrangement (32; 32') has a plurality of diaphragm elements (40, 41), which run substantially transversely with respect to the optical axis (33) and are capable of moving relative to one another about a horizontal axis of rotation (42) arranged parallel to the optical axis (33), wherein one of the upper edges (49) or a plurality of upper edges (49, 50) form, by means of superimposition, the effective upper edge (36) for generating the low beam light distribution (10) with the illuminated region (14) provided above the light-dark boundary (13).

7. The light module (23) as claimed in one of claims 1 to 6, wherein the at least one light source comprises one or more semiconductor light sources (70, 71).

8. The light module (23) as claimed in claim 7, wherein the at least one primary optical element comprises one or more optically effective elements (74), which bundle the emitted light by means of total internal reflection.

9. A motor vehicle headlamp (2) with a light module (23) for generating an adaptive light distribution, which light module (23) comprising
- at least one light source (30; 70, 71) for emitting light,
- at least one primary optical element (31; 73, 74) for boundling the emitted light,
- a diaphragm arrangement (32; 32') for implementing a variable effective upper edge (36; 36'), which can be introduced into a beam path of the emitted and/or bundled light, and
- a secondary optical element (34; 75), preferably in the form of a projection lens, for imaging the light passing the effective upper edge (36; 36') of the diaphragm arrangement (32; 32') on a roadway in front of the vehicle (1), wherein the diaphragm arrangement (32; 32') is designed to implement an effective upper edge (36; 36') which brings about the generation of a low beam light distribution (10) with a substantially horizontal light-dark boundary (13) and with an illuminated region (14) formed at a specific horizontal position above the light-dark boundary (13), which region (14) is delimited on the right-hand side and on the left-hand side by light-dark boundaries and has an extent in the horizontal and vertical directions of in each case a few angular degrees on a measuring screen arranged at a distance in front of the headlamp (2), **characterized in that** the light module (23) comprises means for horizontally pivoting the light module (23) or a part (75) thereof, in order to specifically direct the illuminated region (14) above the horizontal light-dark boundary (13) towards objects detected in front of the vehicle (1).

10. The motor vehicle headlamp (2) as claimed in claim 9, wherein the light module (23) is designed for implementing a spotlight function, and the headlamp (2) has a further light module (24) for implementing basic illumination, with both light modules (23, 24) together forming the low beam light distribution (10).

11. A headlamp system for a motor vehicle (1) for illuminating a roadway in front of the motor vehicle (1) with an adaptive light distribution, which headlamp system comprising, on the nose of the vehicle (1), in each case at least one motor vehicle headlamp (3) on the vehicle's own traffic side and one headlamp (2) on the opposing traffic side, means (5) for recording an image of a region in front of the vehicle (1) and means (6) for evaluating the recorded image for detecting objects in front of the vehicle (1), wherein at least one of the headlamps (2, 3) comprises at least one light module (23, 24) for generating an adaptive light distribution, which light module (23, 24) comprising
- at least one light source (30; 70, 71) for emitting light,
- at least one primary optical element (31; 73, 74) for bundling the emitted light,
- a diaphragm arrangement (32; 32') for implementing a variable effective upper edge (36; 36'), which can be introduced into a beam path of the emitted and/or bundled light, and
- a secondary optical element (34; 75), preferably in the form of a projection lens, for imaging the light passing the effective upper edge (36; 36') of the diaphragm arrangement (32; 32') on a roadway in front of the vehicle (1), wherein the diaphragm arrangement (32; 32') of at least one of the light modules (23) of at least one headlamp (2) is designed to implement an effective upper edge (36; 36') which brings about the generation of a low beam light distribution (10) with a substantially horizontal light-dark boundary (13) and with an illuminated region (14) formed at a specific horizontal position above the light-dark boundary (13), which region (14) is delimited on the right-hand side and on the left-hand side by light-dark boundaries and has an extent in the horizontal and vertical directions of in each case a few angular degrees on a measuring screen arranged at a distance in front of the headlamp (2), **characterized in that** at least one of the light modules (23, 24) comprises means for horizontally pivoting the light module (23) or a part (75) thereof, in order to specifically direct the illuminated region (14) above the horizontal light-dark boundary (13) towards objects detected in front of the vehicle (1).

12. The headlamp system as claimed in claim 11, wherein only the headlamp (2) which is arranged on the opposing traffic side has a light module (23) with a diaphragm arrangement (32; 32') which is designed for implementing an upper edge (36; 36') which brings about the generation of the low beam light distribution (10) with the illuminated region (14) formed above the light-dark boundary (13).

13. The headlamp system as claimed in one of claims 11 or 12, wherein the means (5) for recording the image of a region in front of the vehicle (1) is in the form of a camera, preferably a camera (5) which records the image by receiving and processing invisible IR radiation.

14. The headlamp system as claimed in claim 13, wherein the camera (5) is part of a night vision system of the vehicle (1), which presents to the driver of the vehicle (1) the image of the region in front of the vehicle (1), which has been recorded by means of the camera (5), by means of a display or a projection onto a windshield of the vehicle (1).

## Revendications

1. Module de lumière (23) pour un phare de véhicule automobile (2) pour la génération d'une diffusion de lumière adaptative, le module de lumière (23) comprenant :
- au moins une source de lumière (30 ; 70, 71) pour l'émission de lumière,
- au moins une optique primaire (31 ; 73, 74) pour la concentration de la lumière émise,
- un agencement de diaphragme (32 ; 32') pour la réalisation d'une arête supérieure (36 ; 36') active et variable qui peut être introduite dans une trajectoire de faisceau de la lumière émise et/ou concentrée, et
- une optique secondaire (34 ; 75), de préférence sous la forme d'une lentille de projection pour la projection de la lumière parvenant devant l'arête supérieure (36 ; 36') active de l'agencement de diaphragme (32 ; 32') sur une chaussée devant le véhicule (1), l'agencement de diaphragme (32 ; 32') étant réalisé pour la réalisation d'une arête supérieure (36 ; 36') active, laquelle provoque la génération d'une diffusion de lumière (10) en code avec la limite clair-obscur sensiblement horizontale (13) et avec une zone (14) éclairée réalisée sur une position horizontale déterminée au-dessus de la limite clair-obscur (13), laquelle zone est délimitée à droite et à gauche par des limites clair-obscur et présente sur un écran de mesure pouvant être agencé à distance devant le phare une étendue dans le sens horizontal et vertical de respectivement quelques degrés, **caractérisé en ce que** le module de lumière (23) comporte des moyens pour le pivotement horizontal du module de lumière (23) ou d'une partie (75) de celui-ci afin de diriger la zone éclairée (14) au-dessus de la limite clair-obscur horizontale (13) sur des objets détectés devant le véhicule (1) de manière ciblée.

2. Module de lumière (23) selon la revendication 1, **caractérisé en ce que** la zone éclairée (14) est délimitée à droite et gauche au moins en partie par des limites clair-obscur verticales.

3. Module de lumière (23) selon la revendication 1 ou 2, **caractérisé en ce que** la zone éclairée (14) au-dessus de la limite clair-obscur (13) horizontale présente une étendue d'environ 2° horizontalement et d'environ 3 à 5° verticalement.

4. Module de lumière (23) selon l'une quelconque des revendications précédentes, **caractérisé en ce que** les moyens pour le pivotement horizontal du module de lumière (23) sont prévus pour la réalisation d'une fonction d'éclairage en virage dynamique du phare (2).

5. Module de lumière (23) selon l'une quelconque des revendications 1 à 4, **caractérisé en ce que** l'agencement de diaphragme (32 ; 32') présente un rouleau (32' ; 61) rotatif autour d'un axe de rotation (38) horizontal, s'étendant transversalement à l'axe optique (33), sur la surface enveloppe duquel plusieurs arêtes supérieures (36') s'étendant transversalement à l'axe optique (33), espacées les unes des autres sont réalisées avec différents développements, l'une des arêtes supérieures formant l'arête supérieure (36') active pour la génération de la diffusion de lumière en code (10) avec la zone (14) éclairée prévue au-dessus de la limite clair-obscur (13).

6. Module de lumière (23) selon l'une quelconque des revendications 1 à 4, **caractérisé en ce que** l'agencement de diaphragme (32 ; 32') présente plusieurs éléments de diaphragme (40, 41) mobiles l'un par rapport à l'autre autour d'un axe de rotation (42) horizontal agencé parallèlement à l'axe optique (33) et s'étendant sensiblement transversalement à l'axe optique (33), l'une des arêtes supérieures (49) ou plusieurs arêtes supérieures (49, 50) formant par recouvrement l'arête supérieure (36) active pour la génération de la diffusion de lumière en code (10) avec la zone (14) éclairée prévue au-dessus de la limite clair-obscur (13).

7. Module de lumière (23) selon l'une quelconque des revendications 1 à 6, **caractérisé en ce que** l'au moins une source de lumière comporte une ou plusieurs sources de lumière à semi-conducteur (70, 71).

8. Module de lumière (23) selon la revendication 7, **caractérisé en ce que** l'au moins une optique primaire présente un ou plusieurs éléments actifs optiquement (74) qui concentrent la lumière émise par réflexion totale.

9. Phare de véhicule automobile (2) avec un module de lumière (23) pour la génération d'une diffusion de lumière adaptative, le module de lumière (23) comprenant
- au moins une source de lumière (30 ; 70, 71) pour l'émission de lumière,
- au moins une optique primaire (31 ; 73, 74) pour la concentration de la lumière émise,
- un agencement de diaphragme (32 ; 32') pour la réalisation d'une arête supérieure (36 ; 36') active et variable qui peut être introduite dans une trajectoire de faisceau de la lumière émise et/ou concentrée et
- une optique secondaire (34 ; 75) de préférence sous la forme d'une lentille de projection pour la projection de la lumière parvenant devant l'arête supérieure active (36 ; 36') de l'agencement de diaphragme (32 ; 32') sur une chaussée devant le véhicule (1), l'agencement de diaphragme (32 ; 32') étant réalisé pour la réalisation d'une arête supérieure (36, 36') active, laquelle provoque la génération d'une diffusion de lumière (10) en code avec une limite clair-obscur (13) sensiblement horizontale et avec une zone (14) éclairée réalisée sur une position horizontale déterminée au-dessus de la limite clair-obscur (13), laquelle zone est délimitée à droite et gauche par des limites clair-obscur et présente sur un écran de mesure agencé à distance devant le phare (2) une étendue dans le sens horizontal et vertical de respectivement quelques degrés, **caractérisé en ce que** le module de lumière (23) comporte des moyens pour le pivotement horizontal du module de lumière (23) ou d'une partie (75) de celui-ci afin de diriger la zone éclairée (14) au-dessus de la limite clair-obscur (13) horizontale sur des objets détectés devant le véhicule (1) de manière ciblée.

10. Phare de véhicule automobile (2) selon la revendication 9, **caractérisé en ce que** le module de lumière (23) est réalisé pour la réalisation d'une fonction de lumière concentrée et le phare (2) présente un autre module de lumière (24) pour la réalisation d'un éclairage de base, les deux modules de lumière (23, 24) formant ensemble la diffusion de lumière en code (10).

11. Système de phare pour un véhicule automobile (1) pour l'éclairage d'une chaussée devant le véhicule automobile avec une diffusion de lumière adaptative, le système de phare comprenant à l'avant du véhicule (1) respectivement au moins un phare de véhicule automobile (3) sur le propre côté de circulation et un phare (2) sur le côté de circulation antagoniste, des moyens (5) pour la détection d'une projection d'une zone devant le véhicule (1) et des moyens (6) pour l'évaluation de la projection détectée pour la détection d'objets devant le véhicule (1), au moins l'un des phares (2, 3) présentant au moins un module de lumière (23, 24) pour la génération d'une diffusion de lumière adaptative, le module de lumière (23 ; 24) comprenant
- au moins une source de lumière (30 ; 70, 71) pour l'émission de lumière,
- au moins une optique primaire (31 ; 73, 74) pour la concentration de la lumière émise,
- un agencement de diaphragme (32 ; 32') pour la réalisation d'une arête supérieure (36 ; 36') active et variable qui peut être introduite dans une trajectoire de faisceau de la lumière émise et/ou concentrée et
- une optique secondaire (34 ; 75) de préférence sous la forme d'une lentille de projection pour la réalisation de la lumière parvenant devant l'arête supérieure active (36 ; 36') de l'agencement de diaphragme (32 ; 32') sur une chaussée devant le véhicule (1), l'agencement de diaphragme (32 ; 32') au moins d'un des modules de lumière (23) d'au moins un phare (2) étant réalisé pour la réalisation d'une arête supérieure (36, 36') active, laquelle provoque la génération d'une diffusion de lumière (10) en code avec une limite clair-obscur (13) sensiblement horizontale et avec une zone (14) éclairée réalisée sur une position horizontale déterminée au-dessus de la limite clair-obscur (13), laquelle zone est délimitée à droite et gauche par des limites clair-obscur et présente sur un écran de mesure agencé à distance devant le phare (2) une étendue dans le sens horizontal et vertical de respectivement quelques degrés, **caractérisé en ce qu'**au moins un des modules de lumière (23, 24) comporte des moyens pour le pivotement horizontal de l'au moins un module de lumière (23, 24) ou d'une partie (75) de celui-ci afin de diriger la zone éclairée (14) au-dessus de la limite clair-obscur (13) horizontale sur des objets détectés devant le véhicule (1) de manière ciblée.

12. Système de phare selon la revendication 11, **caractérisé en ce que** seul le phare (2) agencé sur le côté de circulation antagoniste présente un module de lumière (23) avec un agencement de diaphragme (32 ; 32') qui est réalisé pour la réalisation d'une arête supérieure (36 ; 36') qui provoque la génération de la diffusion de lumière en code (10) avec la zone (14) éclairée réalisée au-dessus de la limite clair-obscur (13).

13. Système de phare selon la revendication 11 ou 12, **caractérisé en ce que** les moyens (5) pour la détection de la projection d'une zone devant le véhicule (1) sont réalisés comme une caméra, de préférence comme une caméra (5) qui détecte la projection par réception et traitement d'un rayonnement infrarouge invisible.

14. Système de phare selon la revendication 13, **caractérisé en ce que** la caméra (5) fait partie d'un système de vision nocturne du véhicule (1) qui présente au conducteur du véhicule (1) la projection détectée à l'aide de la caméra (5) de la zone devant le véhicule (1) à l'aide d'un écran ou d'une projection sur un pare-brise du véhicule (1).
